# EUROPÄISCHE PATENTSCHRIFT

(11) **EP 0 626 241 B1**
(45) Veröffentlichungstag und Bekanntmachung des Hinweises auf die Patenterteilung: **05.08.1998**
(21) Anmeldenummer: 94104897.7
(22) Anmeldetag: 28.03.1994
(51) Int. Cl.: B27N 3/14

(54) **Verfahren zum gleichmässigen Verteilen schüttfähigen Materials und Vorrichtung zur Durchführung des Verfahrens**
Method for evenly deviding a pourable material and apparatus for carrying out that method
Procédé pour répartir de manière homogène une matière versable et dispositif pour l'exécution de ce procédé

(30) Priorität: 04.05.1993 DE 4314607
(43) Veröffentlichungstag der Anmeldung: 30.11.1994
(73) Patentinhaber: Schenck Panel Production Systems GmbH, 64293 Darmstadt (DE)
(72) Erfinder: Ebert, Franz Josef, D-64367 Mühltal (DE); Kunstmann, Uwe, Dr., D-64380 Rossdorf (DE); Henschel, Walter, D-64853 Otzberg/Lengfeld (DE)
(74) Vertreter: Behrens, Helmut

(56) Entgegenhaltungen:
- EP-A- 0 483 742
- DE-A- 1 653 224
- DE-A- 2 335 814
- DE-A- 2 535 382
- DE-A- 3 109 151

## Beschreibung

Die Erfindung betrifft ein Verfahren zum gleichmäßigen Verteilen schüttfähigen Materials auf eine in eine Förderrichtung bewegte Unterlage, welches aus einer oberhalb der Unterlage angeordneten Aufgabestelle zugeführt wird, wobei zunächst ein dosiertes Aufgeben eines Materialstroms über die gesamte quer zur Förderrichtung verlaufende Streubreite auf eine zwischen der Unterlage und der Aufgabestelle angeordnete Vergleichmäßigungseinrichtung erfolgt, die aus mehreren in Transportrichtung hintereinander angeordneten Transportelementen besteht, zwischen welchen Teilströme des Materials über die gesamte Streubreite zur Unterlage abgeführt werden, sowie eine Vorrichtung zur Durchführung dieses Verfahrens.

Ein solches Verfahren ist aus der DE 31 09 151 A1 bekannt geworden. Das dort beschriebene Verfahren sieht vor, daß von der Aufgabestelle kommende Material zunächt auf ein Förderband abzulegen und dort über die Breite zu vergleichmäßigen. Anschließend wird es durch einen pendelnden Aufteilkopf auf zwei Gruppen von hintereinander angeordneten Transportwalzen geleitet. Die Transportwalzen einer Gruppe drehen sich gleichsinnig und jeweils zwischen zwei Transportwalzen werden Teilströme nach unten auf das Formband abgeführt.

Die dort beschriebene Anlage ist zum einen durch einen sehr aufwendigen Aufbau gekennzeichnet. Darüberhinaus baut sich bei dieser Anlage das den Transportwalzen zugeführte Material keilförmig auf denselben auf, so daß die Teilströme, welche am Anfang der Transportstrecke auf das Formband gestreut werden aus einer Auflageschicht höherer Dichte stammen als die Teilströme, welche in Transportrichtung gesehen am Ende der Transportwalzenanordnung gestreut werden.

Zwar läßt sich der Materialkeil, welcher auf die Transportrollen aufgeschüttet wird durch eine Erhöhung der Drehzahl der Transportrollen etwas in die Länge ziehen, um die Auswirkungen der Dichteunterschiede geringfügig zu mildern, jedoch sind dieser Maßnahme sehr enge Grenzen gesetzt, da mit der Erhöhung der Drehgeschwindigkeit der Transportwalzen sehr schnell der Bereich der vollkommen unkontrollierten "Streuung" erreicht ist.

Der Erfindung liegt daher die Aufgabe zugrunde, ein gattungsgemäßes Verfahren sowie eine Vorrichtung zur Durchführung dieses Verfahrens zu schaffen, das sich zum einen durch einen geringen gerätetechnischen Aufwand und zum anderen durch sehr hohe Streuqualität auszeichnet.

Diese Aufgabe wird bei dem erfindungsgemäßen Verfahren dadurch erreicht, daß mittels der Vergleichmäßigungseinrichtung mehrere über die gesamte Streubreite gleichgroße Teilmengen gleicher Materialdichte zwischen je zwei Transportelementen gebildet und fein dosiert auf die Unterlage gestreut werden.

Durch das erfindungsgemäße Verfahren werden durch die Vergleichmäßigungseinrichtung mehrere hintereinander angeordnete Teilvorräte gleicher Menge gebildet, aus denen die Teilströme gespeist werden, welche dann auf die bewegte Unterlage gestreut werden. Die Anzahl der Teilvorräte stellt sich automatisch in Abhängigkeit von der Größe des aufgegebenen Materialstroms ein.

Bei einer bevorzugten Ausführungsform der Erfindung ist vorgesehen, daß die Transportelemente der Vergleichmäßigungseinrichtung unterschiedliche Transportcharakteristiken aufweisen, was beispielsweise durch unterschiedliche Profilierung, oder Geschwindigkeiten der Kontaktflächen der Transportelemente erreicht werden kann. Durch diese Maßnahme läßt sich die oben angesprochene "Keilbildung" des Streugutes verhindern.

Bei der Vorrichtung zur Durchführung des erfindungsgemäßen Verfahrens sind die Transportelemente der Vergleichmäßigungseinrichtung durch sich gleichsinnig drehende Transportwalzen und/oder Förderbänder gebildet, deren Längsachsen quer zur Förderrrichtung der Unterlage verlaufen.

Die Streuqualität läßt sich noch weiter erhöhen, wenn die Transportelemente in Richtung ihrer Längsachsen schwingend bewegbar sind, wodurch eine zusätzliche Vergleichmäßigung des zu streuenden Materials in Querrichtung der Unterlage erfolgt.

Zur Vermeidung der "Keilbildung" auf der Vergleichmäßigungseinrichtung sieht eine besonders geeignete Ausführungsform der Erfindung vor, daß die Transportelemente mit unterschiedlich großen Förderstärken betreibbar sind. Dies kann durch eine unterschiedliche Profilierung einzelner Transportelemente oder auch durch unterschiedliche Umfangsgeschwindigkeiten der Kontaktflächen, die mit dem Streugut beaufschlagt werden, geschehen.

Das Auseinanderziehen des aufgegebenen Materialstroms auf der Vergleichmäßigungseinrichtung kann dadurch unterstützt werden, daß die Transportelemente unterschiedliche Abstände zu der Horizontalen besitzen. Hierzu kann die Vergleichmäßigungseinrichtung beispielsweise einen bestimmten Anstellwinkel zur Horizontalen aufweisen; es kann jedoch auch eine treppenförmige Anordnung der Transportelemente eingesetzt werden, bei welcher jeweils zwei Transportelemente auf gleicher Höhe angeordnet sind, wodurch sich eine kaskadenartige Ausbildung ergibt.

Der quer zur Förderrichtung der Unterlage schwingende Antrieb der Transportelemente läßt sich mit überraschend geringem Aufwand dadurch realisieren, daß die Transportelemente der Vergleichmäßigungseinrichtung zu mindestens zwei Gruppen zusammengefaßt sind, denen jeweils ein gemeinsamer Rahmen, in welchem sie gelagert sind, zugeordnet ist, wobei mindestens ein Rahmen schwingend antreibbar ist.

Auf diese Weise kann dafür gesorgt werden, daß zwei benachbarte Transportelemente, die einen Untervorrat tragen relativ zueinander quer zur Transportrichtung schwingen.

Bei einer bevorzugten Ausführungsform der Erfindung ist vorgesehen, daß zwischen der Aufgabestelle und der Unterlage eine Separierung in Fraktionen unterschiedlich großer Materialteilchen erfolgt. Dies kann vorteilhafterweise durch Streuwalzen und/oder Windsichtung geschehen.

Eine Erläuterung der Erfindung ergibt sich aus der nachstehenden Beschreibung von Ausführungsbeispielen anhand der Zeichnung.

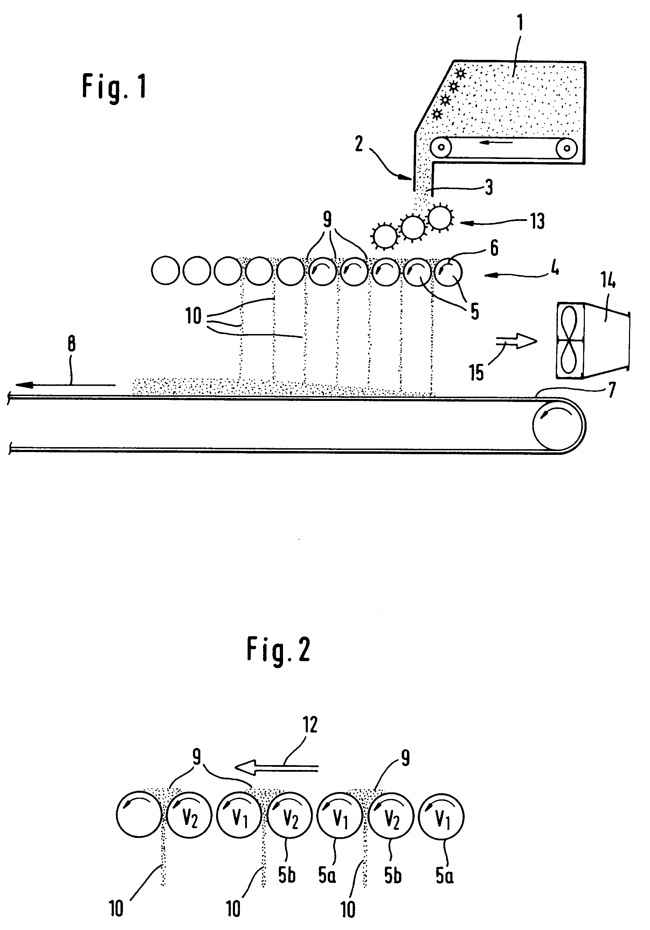

Hierzu zeigt Figur 1 eine erste Ausführungsform der Erfindung. In den Figuren 2-4 sind jeweils unterschiedliche Ausführungsformen der Vergleichmäßigungseinrichtung dargestellt. Dabei werden für einander entsprechende Teile die gleichen Bezugszeichen gewählt.

Figur 1 zeigt schematisch eine Seitenansicht auf eine erfindungsgemäße Streuanlage. Hierbei wird aus einem Bunker 1 an der Aufgabestelle 2 ein Materialstrom 3 dosiert auf eine Vergleichmäßigungseinrichtung 4 aufgegeben.

Die Vergleichmäßigungseinrichtung 4 besteht aus hintereinander angeordneten Transportwalzen 5, welche gleichsinnig angetrieben werden. Die Drehrichtung der Transportwalzen 5 ist durch die Pfeile 6 dargestellt. Unterhalb der Vergleichmäßigungseinrichtung 4 ist ein Formband 7 angeordnet, welches die sich bewegende Unterlage bildet. Die Förderrichtung ist durch den Pfeil 8 angegeben und verläuft senkrecht zu den Längsachsen der Transportwalzen 5.

Die Vergleichmäßigungseinrichtung 4 wird gemäß der Erfindung so betrieben, daß sich zwischen jeweils 2 Transportwalzen 5 ein Untervorrat 9 konstanter Höhe und damit konstanter Dichte bildet. Aus diesen Untervorräten werden die Teilströme 10 nach unten auf das Formband 7 gestreut. Die Anzahl der sich auf der Vergleichmäßigungseinrichtung 4 ausbildenden Untervorräten 9 wird durch die Größe des vom Bunker 1 abgegebenen Materialstroms 3 bestimmt. Diese automatische Einstellung ermöglicht ein gleichmäßiges Aufstreuen einer Materialmatte auf das Formband 7 bei unterschiedlich hohen Materialdurchsätzen.

Weiterhin zeigt Figur 1 eine Streuwalzenanordnung 13, die der Separierung von Fraktionen unterschiedlicher Teilchengröße dient. Dem selben Zweck dient ein Gebläse 14, welches ebenfalls zwischen dem Bunker 1 und dem Formband 7 vorgesehen ist, und welches eine Luftströmung in Richtung des Pfeiles 15 erzeugt. Es ist zur Separierung also sowohl eine Wind- als auch eine Wurfsichtung möglich.

Figur 2 zeigt eine Ausführung der Erfindung, bei welcher jweils benachbarte Transportwalzen 5a bzw. 5b mit unterschiedlich hoher Drehzahl angetrieben werden, so daß sich unterschiedlich hohe Umfangsgeschwindigkeiten V₁ bzw. V₂ einstellen.

Im dargestellten Fall sei V₁ größer als V₂. Dadurch wird das von der Walze 5a transportierte streufähige Gut sehr schnell weiter befördert, so daß sich in Transportrichtung 12 gesehen kein Untervorrat zwischen den Transportwalzen 5a und 5b, sondern lediglich zwischen den Transportwalzen 5b und 5a ausbildet. D. h. es bildet sich nur zwischen jedem 2. Walzenpaar ein Untervorrat 9 aus. Die höhere Förderstärke der Transportwalzen 5a gegenüber derjenigen von den Transportwalzen 5b kann auch durch einen größen Walzendurchmesser erreicht werden; dies läßt sich auch durch die Wahl von unterschiedlichen Profilierungen eine Förderstärkendifferenz zwischen 2 benachbarten Transportwalzen 5 erreichen.

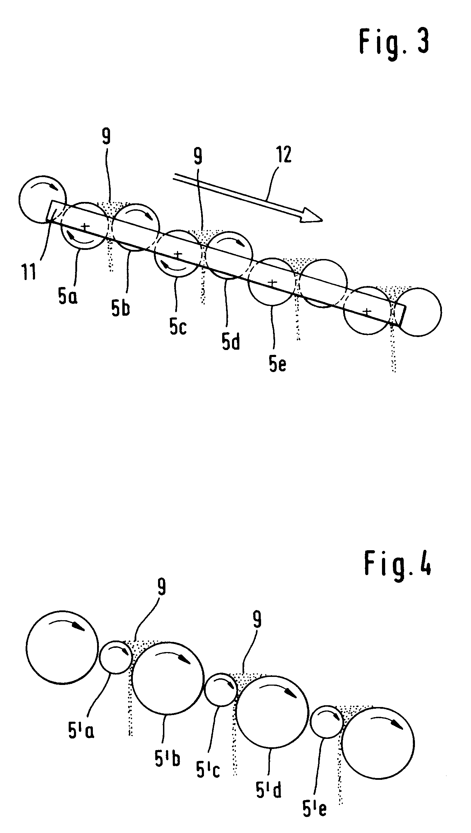

Figur 3 zeigt eine Ausführungsform der Vergleichmäßigungseinrichtung 4, bei welcher die Transportwalzen 5 jeweils paarweise auf gleicher Höhe treppenförmig angeordnet sind. Diese Stufen führen in Förderrichtung 12 gesehen nach unten. Dadurch wird erreicht, daß sich ein Untervorrat 9 lediglich zwischen dem Walzenpaar 5a und 5b bzw. 5c und 5d ausbildet, welche auf einer gemeinsamen Stufe vorgesehen sind. Bei dieser Anordnung wird die Förderleistung der Transportrollen 5 durch die Schräge unterstützt.

Bei der Ausführungsform gemäß Figur 3 ist auch ein Rahmen 11 dargestellt, in welchem jede 2. der Transportwalzen 5 gelagert ist. Dieser Rahmen 11 ist mit einer (nicht dargestellten) Antriebsvorrichtung verbunden, die ein Schwingen in Richtung der Längsachsen der Transportwalzen 5 bewirkt. Dadurch wird eine Erhöhung der Vergleichmäßigung und damit der Streuqualität erreicht.

Die übrigen Transportwalzen können ortsfest drehbar gelagert sein. Sie können jedoch auch in einem weiteren Rahmen angeordnet sein, der ebenfalls, jedoch gegensinnig zum erstgenannten Rahmen 11, schwingend antreibbar ist.

Eine Abwandlung der eben beschriebenen Ausführungsform der Vergleichmäßigungseinrichtung 4 ist in Figur 4 dargestellt, wobei die treppenartige Ausbildung der Untervorräte 9 durch unterschiedlich große Transportwalzen 5' erreicht wird, die jeweils abwechselnd hintereinander angeordnet sind.

Werden diese Transportwalzen 5' mit der gleichen Drehzahl betrieben, so stellen sich aufgrund der Durchmesserdifferenzen unterschiedliche Umfanggeschwindigkeiten und damit Förderstärken ein.

Dadurch läßt sich das von der Aufgabestelle 2 kommende Streugut sehr vorteilhaft auseinanderziehen, was die in der Einleitung beschriebene "Keilausbildung" vermeidet. Die Wirkung der unterschiedlich großen Umfanggeschwindigkeiten wird noch unterstützt durch die kaskadenförmig abgestufte Lage der einzelnen Untervorrräte 9.

So weist die Transportwalze 5'a einen geringeren Durchmesser auf als die ihr nachgeschaltete Transportwalze 5'b, welcher wieder eine Transportwalze 5'c kleineren Durchmessers folgt usw.
Dadurch bilden sich im Betrieb Untervorräte zwischen den Transportwalzen 5'a und 5'b, 5'c und 5' d, usw. aus. Die Transportwalzen 5'b, 5'd und so fort werfen ankommendes Material aufgrund ihrer höheren Förderstärke zum Teil über mehrere Transportwalzen hinweg, was die Bildung von gleichen Untervorräten 9 gleicher Dichte über die gesamte Streubreite sicherstellt.

## Patentansprüche

1. Verfahren zum gleichmäßigen Verteilen schüttfähigen Materials auf eine in eine Förderrichtung bewegte Unterlage, welches aus einer oberhalb der Unterlage angeordneten Aufgabestelle zugeführt wird, wobei zunächst ein dosiertes Aufgeben eines Materialstroms über die gesamte quer zur Förderrichtung verlaufende Streubreite auf eine zwischen der Unterlage und der Aufgabestelle angeordnete Vergleichmäßigungseinrichtung, die aus mehreren in Transportrichtung hintereinander angeordneten Transportelementen besteht, zwischen welchen Teilströme des Materials über die gesamte Streubreite zur Unterlage abgeführt werden, erfolgt, dadurch gekennzeichnet, daß durch geeignete Einstellung der Transportcharakteristiken der Transportelemente mittels der Vergleichmäßigungseinrichtung (4) mehrere über die gesamte Streubreite gleichgroße Teilmengen (9) gleicher Materialdichte zwischen je zwei Transportelementen gebildet, vergleichmäßigt und fein dosiert auf die Unterlage (7) gestreut werden.

2. Verfahren nach Anspruch 1, dadurch gekennzeichnet, daß die Transportelemente (5) der Vergleichmäßigungseinrichtung (4) unterschiedliche Transportcharakteristiken aufweisen.

3. Vorrichtung zum gleichmäßigen Verteilen schüttfähigen Materials auf eine in eine Förderrichtung bewegte Unterlage, welches aus einer oberhalb der Unterlage angeordneten Aufgabestelle zugeführt wird, wobei zunächst ein dosiertes Aufgeben eines Materialstroms über die gesamte quer zur Förderrichtung verlaufende Streubreite auf eine zwischen der Unterlage und der Aufgabestelle angeordnete Vergleichmäßigungseinrichtung, die aus mehreren in Transportrichtung hintereinander angeordneten Transportelementen besteht, zwischen welchen Teilströme des Materials über die gesamte Streubreite zur Unterlage abgeführt werden, erfolgt, dadurch gekennzeichnet, daß durch geeignete Einstellung der Transportcharakteristiken der Transportelemente mittels der Vergleichmäßigungseinrichtung (4) mehrere über die gesamte Streubreite gleichgroße Teilmengen (9) gleicher Materialdichte zwischen je zwei Transportelementen (5) gebildet und fein dosiert auf die Unterlage (7) gestreut werden.

4. Vorrichtung nach Anspruch 3, dadurch gekennzeichnet, daß die Transportelemente (5) der Vergleichmäßigungseinrichtung (4) durch gleichsinnig drehende Transportwalzen und/oder Förderbänder gebildet werden, deren Längsachsen quer zur Förderrichtung (8) der Unterlage verlaufen.

5. Vorrichtung nach Anspruch 3 oder 4, dadurch gekennzeichnet, daß die Transportelemente (5) in Richtung ihrer Längsachsen schwingend bewegbar sind.

6. Vorrichtung nach einem der Anspruch 3 bis 5, dadurch gekennzeichnet, daß die Transportelemente (5) mit unterschiedlich großen Förderstärken betreibbar sind.

7. Vorrichtung nach Anspruch 6, dadurch gekennzeichnet, daß die Transportelemente (5) unterschiedliche Profilierung besitzen.

8. Vorrichtung nach Anspruch 6 oder 7, dadurch gekennzeichnet, daß die Transportelemente (5) mit voneinander unterschiedlichen Umfangsgeschwindigkeiten betrieben werden.

9. Vorrichtung nach einem der vorhergehenden Ansprüche, dadurch gekennzeichnet, daß die Transportelemente (5) unterschiedliche Abstände zu der Horizontalen besitzen.

10. Vorrichtung nach einem der vorhergehenden Ansprüche, dadurch gekennzeichnet, daß die Transportelemente (5) in Transportrichtung treppenförmig gestuft angeordnet sind, wobei jeweils zwei Transportelemente (5a, 5b) auf gleicher Höhe angeordnet sind.

11. Vorrichtung nach einem der Ansprüche 4 bis 9, dadurch gekennzeichnet, daß die Transportelemente (5) der Vergleichmäßigungseinrichtung (4) zu mindestens zwei Gruppen zusammengefaßt sind, denen jeweils ein gemeinsamer Rahmen (11), in welchen sie gelagert sind, zugeordnet ist, wobei mindestens ein Rahmen schwingend antreibbar ist.

12. Vorrichtung nach einem der vorhergehenden Ansprüche, dadurch gekennzeichnet, daß zwischen der Aufgabestelle (2) und der Unterlage (7) mindestens eine Streuwalze (13) zur Separierung angeordnet ist.

13. Vorrichtung nach einem der vorhergehenden Ansprüche, dadurch gekennzeichnet, daß zwischen der Aufgabstelle (2) und der Unterlage (7) eine Windsichtung erfolgt.

## Claims

1. Method of uniformly distributing free-flowing material onto a support which is moved in a conveying direction, the said material being delivered from a feed point disposed above the support, wherein first of all metered feeding of a stream of material takes place over the entire scattering width, which extends perpendicular to the conveying direction, onto an equalising device which is disposed between the support and the feed point and consists of a plurality of transport elements disposed one behind the other in the transport direction, between which part-streams of the material are discharged over the entire scattering width to the support, characterised in that by suitable setting of the transport characteristics of the transport elements by means of the equalising device (4) a plurality of part-quantities (9) of the same magnitude over the entire scattering width and the same material density are formed between each pair of transport elements, equalised and scattered, precisely metered, onto the support (7).

2. Method as claimed in Claim 1, characterised in that the transport elements (5) of the equalising device (4) have different transport characteristics.

3. Apparatus for uniformly distributing free-flowing material onto a support which is moved in a conveying direction, the said material being delivered from a feed point disposed above the support, wherein first of all metered feeding of a stream of material takes place over the entire scattering width, which extends perpendicular to the conveying direction, onto an equalising device which is disposed between the support and the feed point and consists of a plurality of transport elements disposed one behind the other in the transport direction, between which part-streams of the material are discharged over the entire scattering width to the support, characterised in that by suitable setting of the transport characteristics of the transport elements by means of the equalising device (4) a plurality of part-quantities (9) of the same magnitude over the entire scattering width and the same material density are formed between each pair of transport elements (5) and scattered, precisely metered, onto the support (7).

4. Apparatus as claimed in Claim 3, characterised in that the transport elements (5) of the equalising device (4) are formed by transport rollers which rotate in the same direction and/or conveyor belts, the longitudinal axes of which extend perpendicular to the conveying direction (8) of the support.

5. Apparatus as claimed in Claim 3 or 4, characterised in that the transport elements (5) are movable in the direction of their longitudinal axes so as to vibrate.

6. Apparatus as claimed in one of Claims 3 to 5, characterised in that the transport elements (5) can be operated at differing conveying powers.

7. Apparatus as claimed in Claim 6, characterised in that the transport elements (5) have different profiling.

8. Apparatus as claimed in Claim 6 or 7, characterised in that the transport elements (5) are operated at circumferential speeds which differ from one another.

9. Apparatus as claimed in one of the preceding claims, characterised in that the transport elements (5) are at different distances from the horizontal.

10. Apparatus as claimed in one of the preceding claims, characterised in that the transport elements (5) are disposed so that they are graduated in the form of steps in the transport direction, two transport elements (5a, 5b) in each case being disposed at the same height.

11. Apparatus as claimed in one of Claims 4 to 9, characterised in that the transport elements (5) of the equalising device (4) are combined into at least two groups, with which are associated in each case a common frame (11) in which they are mounted, at least one frame being capable of being driven so as to vibrate.

12. Apparatus as claimed in one of the preceding claims, characterised in that at least one scattering roller (13) for separation is disposed between the feed point (2) and the support (7).

13. Apparatus as claimed in one of the preceding claims, characterised in that an air separation takes place between the feed point (2) and the support (7).

## Revendications

1. Procédé pour répartir de manière homogène sur un substrat déplacé suivant une direction d'avancement une matière déversable qui est amenée à partir d'un poste de chargement agencé au-dessus du substrat, un chargement dosé d'un courant de matière étant tout d'abord effectué sur la totalité de la largeur de distribution, qui s'étend transversalement à la direction d'avancement, à un dispositif d'homogénéisation qui est agencé entre le substrat et le poste de chargement et qui est constitué de plusieurs éléments de transport qui sont agencés l'un derrière l'autre dans la direction de transport et entre lesquels des courants partiels de la matière sont évacués vers le substrat sur la totalité de la largeur de distribution, caractérisé en ce que, par un ajustement approprié des caractéristiques de transport des éléments de transport, plusieurs quantités partielles (9), de même grandeur sur la largeur de distribution et de même densité de matière, sont, au moyen du dispositif d'homogénéisation (4), formées entre chaque fois deux éléments de transport, homogénéisées et distribuées de manière finement dosée sur le substrat (7).

2. Procédé suivant la revendication 1, caractérisé en ce que les éléments de transport (5) du dispositif d'homogénéisation (4) présentent des caractéristiques de transport différentes.

3. Dispositif pour répartir de manière homogène sur un substrat déplacé suivant une direction d'avancement une matière déversable qui est amenée à partir d'un poste de chargement agencé au-dessus du substrat, un chargement dosé d'un courant de matière ayant tout d'abord lieu sur la totalité de la largeur de distribution, qui s'étend transversalement à la direction d'avancement, à un dispositif d'homogénéisation qui est agencé entre le substrat et le poste de chargement et qui est constitué de plusieurs éléments de transport qui sont disposés l'un derrière l'autre dans la direction de transport et entre lesquels des courants partiels de la matière sont évacués vers le substrat sur la totalité de la largeur de distribution, caractérisé en ce que, par un ajustement approprié des caractéristiques de transport des éléments de transport, plusieurs quantités partielles (9) de même dimension sur la totalité de la largeur de distribution et de même densité de matière sont, au moyen du dispositif d'homogénéisation (4), formées entre chaque fois deux éléments de transport (5) et distribuées de manière finement dosée sur le substrat (7).

4. Dispositif suivant la revendication 3, caractérisé en ce que les éléments de transport (5) du dispositif d'homogénéisation (4) sont formés par des rouleaux de transport et/ou bandes transporteuses tournant dans le même sens dont les axes longitudinaux s'étendent transversalement à la direction d'avancement (8) du substrat.

5. Dispositif suivant l'une des revendications 3 et 4, caractérisé en ce que les éléments de transport (5) sont déplaçables de manière oscillante suivant la direction de leurs axes longitudinaux.

6. Dispositif suivant l'une des revendications 3 à 5, caractérisé en ce que les éléments de transport (5) peuvent être mis en service à des puissances de transport différemment grandes.

7. Dispositif suivant la revendication 6, caractérisé en ce que les éléments de transport (5) présentent des profilages différents.

8. Dispositif suivant l'une des revendications 6 et 7, caractérisé en ce que les éléments de transport (5) sont mis en service à des vitesses périphériques mutuellement différentes.

9. Dispositif suivant l'une des revendications précédentes, caractérisé en ce que les éléments de transport (5) présentent des écarts différents par rapport à une horizontale.

10. Dispositif suivant l'une des revendications précédentes, caractérisé en ce que les éléments de transport (5) sont agencés de manière graduée en escalier dans la direction de transport, deux éléments de transport (5a, 5b) étant chaque fois agencés à même hauteur.

11. Dispositif suivant l'une des revendications 4 à 9, caractérisé en ce que les éléments de transport (5) du dispositif d'homogénéisation (4) sont réunis en au moins deux groupes, à chacun desquels est adjoint un cadre commun (11), dans lequel ils sont supportés, au moins un cadre pouvant être entraîné de manière oscillante.

12. Dispositif suivant l'une des revendications précédentes, caractérisé en ce qu'entre le poste de chargement (2) et le substrat (7) au moins un rouleau de distribution (13) est agencé pour la séparation.

13. Dispositif suivant l'une des revendications précédentes, caractérisé en ce qu'un triage à vent a lieu entre le poste de chargement (2) et le substrat (7).
